# NEUE EUROPÄISCHE PATENTSCHRIFT

(11) **EP 1 826 557 B2**
(45) Veröffentlichungstag und Bekanntmachung des Hinweises auf die Entscheidung über den Einspruch: **06.10.2021**
(45) Hinweis auf die Patenterteilung: 23.09.2015
(21) Anmeldenummer: 07000398.3
(22) Anmeldetag: 10.01.2007
(51) Int. Cl.: G01N 21/89, G01N 21/894, A24C 5/34, G01N 21/952

(54) **Optische Kontrolle von Produkten der Tabak verarbeitenden Industrie**
Optical monitoring of products of the tobacco processing industry
Contrôle optique de produits de l'industrie du traitement du tabac

(30) Priorität: 27.02.2006 DE 102006009482
(43) Veröffentlichungstag der Anmeldung: 29.08.2007
(73) Patentinhaber: Hauni Maschinenbau GmbH, 21033 Hamburg (DE)
(72) Erfinder: Gast, Roland, 21077 Hamburg (DE); Ibel, Michael, 25469 Halstenbek (DE)
(74) Vertreter: Seemann & Partner Patentanwälte mbB

(56) Entgegenhaltungen:
- EP-A1- 0 731 350
- EP-A2- 0 548 695
- EP-A2- 0 570 163
- EP-B1- 0 812 548
- WO-A-01/79092
- WO-A1-98/01746
- DE-A1- 3 420 470
- DE-A1- 3 437 753
- DE-A1-102004 040 912
- JP-A- S60 179 639
- JP-A- 2002 148 204
- US-A- 5 118 192
- US-A- 5 228 462
- US-A- 5 642 198
- US-A- 6 047 082
- US-B1- 6 232 617
- Article 'Epipolargeometrie' from Wikipedia , March 8, 2008
- Chapter 4 and 8: "'Epipolargeometrie' and 'Stereoanalyse'" In: O Schreer: "excerpts from Stereoanalyse und Bildsynthese", 2005, Springer Verlag pages 65-70, 125-127,
- Domingo Mery und Dieter Filbert: "Die Epipolargeometrie in der Röntgendurchleuchtungsprüfung: Grundlagen und Anwendung", Automatisierungstechnik, vol. 48, 2000, Oldenburg

## Beschreibung

Die Erfindung betrifft eine Einrichtung sowie ein Verfahren zur elektromagnetischen, insbesondere optischen, Kontrolle von Produkten der Tabak verarbeitenden Industrie in einer Kontrollzone.

Des Weiteren betrifft die Erfindung eine Maschine der Tabak verarbeitenden Industrie, die eine derartige Einrichtung umfasst.

Unter Produkten der Tabak verarbeitenden Industrie werden im Rahmen der Erfindung insbesondere stab- und streifenförmige Produkte und Objekte wie Zigaretten, Filterstäbe, Multisegmentfilterstäbe, Zigaretten- oder Belagpapier, sowie Stempelaufdrucke auf Papierbahnen oder Leimauftrag auf Papierbahnen verstanden.

Bei der optischen Kontrolle solcher Produkte der Tabak verarbeitenden Industrie werden üblicherweise Qualitätsmerkmale an den Produkten überprüft und bewertet, wie beispielsweise das Vorhandensein von Löchern, Flecken, Beschädigungen und dergleichen.

Aus der Offenlegungsschrift DE 34 20 470 A1 (entsprechend US 4,639,592) ist eine Vorrichtung zum optischen Prüfen der Umhüllung stabförmiger Artikel der Tabak verarbeitenden Industrie mit einem umlaufenden Fördermittel zum queraxialen Fördern der Artikel in einlagiger Reihe durch eine Prüfzone und mit einem auf die Prüfzone ausgerichteten optischen Prüfmittel bekannt, welches ein einen achsparallelen Umfangsabschnitt jedes die Prüfzone passierenden Artikels ausleuchtendes Beleuchtungsmittel und ein optoelektrisches Sensormittel mit einer Reihe unterschiedlicher Längenabschnitte der beleuchteten Artikeloberfläche zugeordneter optoelektrischer Detektormittel zum Erfassen des an der Artikeloberfläche reflektierten Lichts aufweist. Die Prüfzone weist dabei wenigstens einen ersten und einen zweiten Prüfzonenabschnitt auf, wobei auf jeden Prüfzonenabschnitt wenigstens ein optisches Prüfmittel ausgerichtet ist und wobei die beim Durchgang durch den ersten Prüfzonenabschnitt verdeckten Umfangsabschnitte der Artikel beim Durchgang durch den zweiten Prüfzonenabschnitt den optischen Prüfmitteln zugewandt sind. Auf diese Weise wird eine Prüfvorrichtung zum optischen Prüfen von stabförmigen Artikeln der Tabak verarbeitenden Industrie angegeben, welche eine zuverlässige Aussage über den Zustand der ganzen Artikeloberfläche gewährleisten soll. Dabei besteht allerdings eine gewisse Wahrscheinlichkeit, dass umherfliegende Partikel, wie beispielsweise Tabakstaub, die optische Kontrolle stören und es zu Fehlbewertungen kommt.

Aus der Patentschrift EP 0 812 548 B1 ist ein Verfahren zur Überwachung der äußeren Unversehrtheit von Zigaretten bekannt, die in einer Vorschubrichtung mit Hilfe eines Förderers entlang einer Bahn befördert werden und dabei den Abschnitt einer Kontrollstrecke passieren, wobei sie unter Verwendung von optischen Mehrlinien-Abtastmitteln auf ihre äußeren Eigenschaften geprüft werden. Dabei entspricht jedes gesonderte optische Abtasten einer einzelnen Linie aus einem Bündel von längs nebeneinander angeordneten parallelen Linien. Wird eine Zigarette entlang ihrer Vorschubrichtung entsprechend um ihre eigene Längsachse gedreht, so ist es möglich, das Abtasten mehr als einmal entlang ein und derselben Linie, bezogen auf die zylindrische Oberfläche der Zigarette, vorzunehmen. Auf diese Weise lassen sich Schmutzpartikel zwischen der Zigarette und den optischen Abtastmitteln, die sich relativ zur Zigarette bewegen, als solche erkennen und werden nicht fälschlicherweise als Fehler an einer Zigarette angesehen.

In EP 0 570 163 A2 ist ein System zur optischen Inspektion von zylindrischen Oberflächen offenbart, bei dem eine Zigarette, die in der Mulde einer Muldentrommel gefördert wird, zunächst von einer Seite optisch erfasst wird, im Folgenden weitergefördert und dabei um ihre Längsachse gedreht wird und schließlich von der anderen Seite optisch erfasst wird.

EP 0 548 695 A2 offenbart eine weitere Vorrichtung zur Inspektion der Oberfläche zylindrischer Objekte. Hierbei werden die zylindrischen Objekte gefördert, während der Förderung mit einer großen Winkelgeschwindigkeit um ihre Achse gedreht und die Oberfläche mittels einer Folge von Stroboskop-Pulsen in Sektionen von 60° des Umfangs mittels einer CCD-Kamera erfasst. So wird die gesamte Oberfläche mittels einer Abfolge von Bildern einer einzelnen CCD-Kamera einmal komplett gescannt, und die Luminanz der Bilder kumuliert. Die Vorrichtung ist ausgebildet, bedruckte Teile der Oberfläche zu maskieren und bei der Inspektion nicht zu berücksichtigen.

US 6,169,600 B1 betrifft ein Inspektionssystem und -verfahren zum optischen Inspizieren der gesamten Umfangsfläche von zylindrischen Oberflächen wie beispielsweise Zigaretten. Eine Optik wird innerhalb eines Gehäuses mittels Ventilation oder Versiegelung des Gehäuses vor Staub geschützt. Umherfliegende Staubteilchen, die die Aufnahmen der Zigaretten stören können, werden aufgrund der Unschärfe ihrer Abbildung erkannt.

Aufgabe der vorliegenden Erfindung ist es, eine Einrichtung sowie ein Verfahren anzugeben, mit welchen Fehlbewertungen von Produkten der Tabak verarbeitenden Industrie in der Weise, dass intakte Produkte als fehlerhaft angesehen werden, vermieden werden. Des Weiteren ist es Aufgabe der vorliegenden Erfindung, eine Maschine anzugeben, welche eine derartige Einrichtung umfasst.

Die Aufgabe wird gelöst durch eine Einrichtung zur elektromagnetischen, insbesondere optischen, Kontrolle von stabförmigen Produkten der Tabak verarbeitenden Industrie in einer Kontrollzone, wobei die Einrichtung eine Vorrichtung zum Fördern der Produkte in einlagiger Reihe hintereinander durch die Kontrollzone aufweist, die eine Vorrichtung zur Auswertung der von Aufnahmevorrichtungen erfassten Aufnahmen aufweist, wobei mindestens zwei aus unterschiedlichen Richtungen auf die Kontrollzone ausgerichtete Aufnahmevorrichtungen vorgesehen sind, wobei zwei Aufnahmevorrichtungen auf das mindestens eine Produkt ausgerichtet sind, die dadurch weitergebildet ist, dass die Aufnahmevorrichtungen derart versetzt und winkelig zueinander angeordnet sind, ein Teilbereich der Oberfläche des Produkts zwei-fach und aus zwei verschiedenen Blickwinkeln abgebildet wird, wobei die Vorrichtung zum Vergleichen der zu den von den Aufnahmevorrichtungen aufgenommenen Aufnahmen gehörenden Daten miteinander ausgebildet ist.

Die erfindungsgemäße Einrichtung hat den Vorteil, dass die Oberfläche eines stabförmigen Produkts der Tabakverarbeitenden Industrie, beispielsweise einer Zigarette, aus mindestens zwei verschiedenen Blickwinkeln erfasst wird. Die Oberfläche des Produkts wird dadurch mindestens zweifach, d.h. mehrfach, abgebildet. Auf diese Weise werden störende Partikel, die sich in der Kontrollzone zwischen der Oberfläche des Produkts und den Aufnahmevorrichtungen, also nicht auf der Produktoberfläche befinden, auf den Aufnahmen der Aufnahmevorrichtungen jeweils an unterschiedlichen Positionen relativ zum Produkt angezeigt, denen über die Auswertevorrichtung keine eindeutige Stelle auf der Produktoberfläche zugeordnet werden kann. Mit Oberfläche des Produkts ist im Folgenden stets gemeint, dass es sich auch um einen Teilbereich der Oberfläche eines Produkts oder um Oberflächen mehrerer Produkte handeln kann.

In einer weiteren Ausführungsform weist die Einrichtung eine Vorrichtung zur Beleuchtung der Kontrollzone auf.

Erfindungsgemäß ist eine Vorrichtung zum Fördern der Produkte in einlagiger Reihe hintereinander durch die Kontrollzone vorgesehen. Durch die Beförderung in einlagiger Reihe, die auch mehrbahnig sein kann, kann gewährleistet werden, dass die Aufnahmevorrichtungen tatsächlich jedes vorbei geförderte Produkt kontrollieren können.

Die Aufgabe wird darüber hinaus durch eine Maschine der Tabak verarbeitenden Industrie gelöst, die eine der oben genannten Einrichtungen umfasst.

Die Aufgabe wird ferner durch ein entsprechendes Verfahren gelöst. Das erfindungsgemäße Verfahren zur elektromagnetischen, insbesondere optischen, Kontrolle von stabförmigen Produkten der Tabak verarbeitenden Industrie in einer Kontrollzone ist dadurch gekennzeichnet, dass die Kontrollzone von Aufnahmevorrichtungen aus zweiunterschiedlichen Richtungen erfasst wird, wobei zwei Aufnahmen von einem Teilbereich der Oberfläche des wenigstens einen Produkts aus unterschiedlichen Richtungen erfasst werden, die beiden Aufnahmen an eine Auswertevorrichtung weitergeleitet und in der Auswertevorrichtung die zu den Aufnahmen gehörigen Daten miteinander verglichen werden, wobei eine Unregelmäßigkeit auf der Oberfläche des Produkts dann unterstellt wird, wenn eine Unregelmäßigkeit auf den zwei Aufnahmen an solchen Positionen auftritt, dass solchen zwei Positionen genau eine Stelle auf der Oberfläche 5 des Produkts zugeordnet werden kann. Die Auswertung erfolgt dabei insbesondere in der Weise, dass die von den Aufnahmevorrichtungen erfassten Aufnahmen als Daten an eine Auswertevorrichtung weitergeleitet werden, in der die Daten der mindestens zwei Aufnahmevorrichtungen kombiniert ausgewertet werden.

Bevorzugt wird keine Unregelmäßigkeit auf der Oberfläche des Produkts unterstellt, wenn keiner Unregelmäßigkeit auf den zwei Aufnahmen eine eindeutige Stelle der Oberfläche zugeordnet werden kann.

Das bedeutet nichts anderes, als dass eine Unregelmäßigkeit, beispielsweise ein Loch oder ein Flecken in der Oberfläche einer Zigarette, nur dann unterstellt wird, wenn beide Aufnahmen die Position einer Unregelmäßigkeit so angeben, dass genau eine Stelle auf der Oberfläche der Zigarette dafür in Frage kommt. Wenn dies nicht der Fall ist, wenn also die Unregelmäßigkeit auf den Aufnahmen an zwei verschiedenen Positionen festgestellt wird, lässt sich dieser Widerspruch dadurch lösen, dass die Unregelmäßigkeit durch ein störendes Partikel in der Kontrollzone zwischen der Oberfläche des Produkts, beispielsweise einer Zigarette, und den Aufnahmevorrichtungen verursacht ist. In diesem Fall liefert die Auswertung gemäß dem erfindungsgemäßen Verfahren, dass eine Unregelmäßigkeit auf der Oberfläche des Produkts nicht vorliegt. Wenn auf keiner der Aufnahmen eine Unregelmäßigkeit erfasst wird, wird auf dem Produkt ebenfalls keine Unregelmäßigkeit unterstellt. In der Folge davon wird ein solches Produkt nicht als fehlerhaft aussortiert.

Eine andere Variante eines Verfahrens besteht darin, dass bei Aufnahmen der Kontrollzone aus zwei unterschiedlichen Richtungen das Produkt nur einmal von einer Aufnahme erfasst wird.

In diesem nicht erfindungsgemäßen Fall erfolgt die Auswertung der beiden Aufnahmen vorteilhafterweise in der Weise, dass eine Unregelmäßigkeit auf der Oberfläche dann unterstellt wird, wenn eine Unregelmäßigkeit auf genau einer Aufnahme festgestellt wird. Das bedeutet, dass sich die Unregelmäßigkeit auf der Oberfläche des Produkts befindet und auf der Aufnahme festzustellen ist, die der Aufnahmevorrichtung zuzuordnen ist, welche die Kontrollzone mit dem zu prüfenden Produkt aufnimmt. Die Aufnahmevorrichtung, welche die Kontrollzone ohne das Produkt erfasst, zeigt dagegen keine Unregelmäßigkeit. Tritt nun der Fall ein, dass beide Aufnahmen Unregelmäßigkeiten zeigen, so ist diese Konstellation so zu erklären, dass die von beiden Aufnahmevorrichtungen angezeigte Unregelmäßigkeit durch eines in der Kontrollzone zwischen der Oberfläche des Produkts und den Aufnahmevorrichtungen befindliches störendes Partikel hervorgerufen ist. Zeigt keine der beiden Aufnahmevorrichtungen eine Unregelmäßigkeit an, so nimmt man an, dass keine Unregelmäßigkeit auf der Oberfläche des Produkts vorliegt und sich auch kein störendes Partikel in der Kontrollzone zwischen der Oberfläche des Produkts und den Aufnahmevorrichtungen befindet.

Zur optischen Kontrolle werden als Aufnahmevorrichtungen üblicherweise Zeilen- oder Matrix-Kameras eingesetzt, die aufgrund der hohen Anforderungen an die Abbildungs- und Auflösungsqualität in der Regel mit aufwändigen, großen Objektiven ausgestattet sind.

Die Beleuchtung der Produkte der Tabak verarbeitenden Industrie in ihrer Rolle als Messobjekte der Aufnahmevorrichtungen wird mit separaten Lichtquellen realisiert, die wegen des großen Abstands zum Objekt hohe Lichtstärken besitzen sollen. Es ist unter anderem auch bekannt, das Licht unter Intensitätsverlusten mit Lichtleitkabeln an das Messobjekt heranzuführen.

Die Auswertevorrichtung ist beispielsweise als Computer und/oder Maschinenzentrale ausgebildet. Die von den Aufnahmevorrichtungen gespeicherten Messwerte werden an die Auswertevorrichtung weitergeleitet und dort miteinander kombiniert ausgewertet.

Vor einer solchen Auswertung erfolgt zweckmäßigerweise eine Kalibrierung der Einrichtung und insbesondere der Aufnahmevorrichtungen und der Auswertevorrichtung in der Weise, dass die anschließende Auswertung der Aufnahmen zu den richtigen Schlussfolgerungen bezüglich des Vorliegens einer Unregelmäßigkeit auf der Oberfläche eines Produkts führt.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
Fig. 1 eine erfindungsgemäße Einrichtung mit zwei Aufnahmevorrichtungen, welche beide auf das Produkt ausgerichtet sind,
Fig. 2 eine alternative, nicht erfindungsgemäße Ausführungsform der Einrichtung mit zwei Aufnahmevorrichtungen, von denen eine auf das Produkt ausgerichtet ist.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

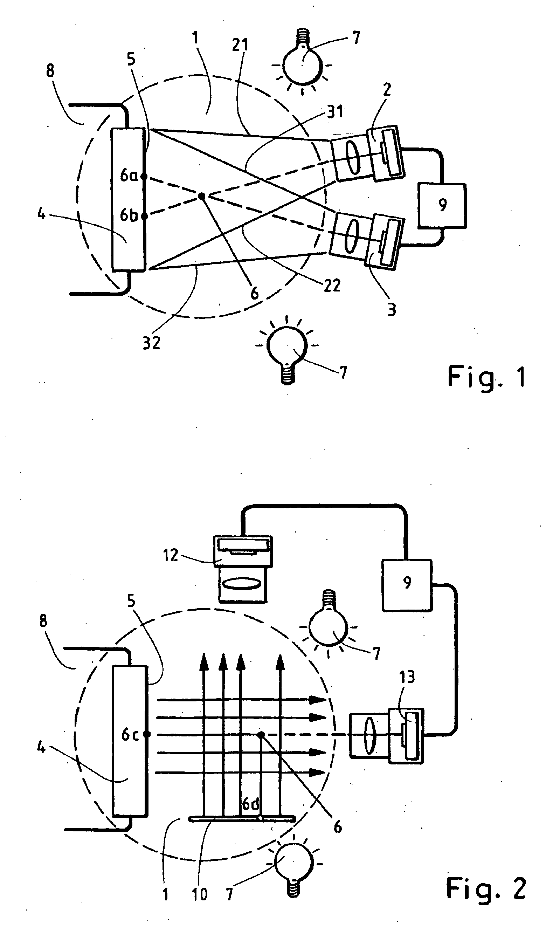

In Fig. 1 ist eine Ausführungsform der erfindungsgemäßen Einrichtung schematisch dargestellt. Ein Produkt 4 der Tabak verarbeitenden Industrie, beispielsweise ein Zigarettenstab, befindet sich in einer Kontrollzone 1, durch die das Produkt 4 mittels einer Vorrichtung 8 in einlagiger Reihe bewegt wird. Die Kontrollzone 1 ist durch eine gestrichelte Linie in Form einer geschlossenen Kurve dargestellt. Eine Vorrichtung 7 dient der Beleuchtung der Kontrollzone 1, insbesondere der Oberfläche 5 des Produkts 4. Auf die Oberfläche 5 sind zwei Aufnahmevorrichtungen 2, 3 gerichtet, die mit einer Vorrichtung 9 zur Auswertung der von den Aufnahmevorrichtungen 2, 3 erfassten Aufnahmen verbunden sind. Die beiden Aufnahmevorrichtungen 2, 3 sind derartig versetzt und winkelig zueinander angeordnet, dass die Oberfläche 5 aus unterschiedlichen Richtungen erfasst wird. Des Weiteren ist ein Partikel 6 in der Kontrollzone 1 zwischen der Oberfläche 5 und den Aufnahmevorrichtungen 2, 3 dargestellt, das ist beispielsweise ein Schmutzpartikel oder ein Tabakkrümel. Eine Aufnahme durch die Aufnahmevorrichtung 2 wird das Partikel 6 nun wie eine Unregelmäßigkeit in der Position 6b auf der Oberfläche 5 des Produkts 4 wiedergeben, vgl. den Verlauf der entsprechenden gestrichelten Linie zu der Position 6b. Eine Aufnahme durch die Aufnahmevorrichtung 3 wird das Partikel 6 dagegen wie eine Unregelmäßigkeit in der Position 6a auf der Oberfläche 5 des Produkts 4 wiedergeben, vgl. den Verlauf der entsprechenden gestrichelten Linie zu der Position 6a. Die von den beiden Aufnahmevorrichtungen 2, 3 erfassten Bereiche sind jeweils durch gerade Linien 21, 22 und 31, 32 begrenzt. Die beiden Aufnahmen werden an die Auswertevorrichtung 9 weitergeleitet. Dort werden die zu den Aufnahmen gehörigen Daten miteinander verglichen, wobei eine Unregelmäßigkeit an zwei Positionen 6a und 6b festgestellt wird. Da die beiden Positionen 6a und 6b nicht miteinander übereinstimmen, wird die Auswertevorrichtung 9 dieses Messergebnis in der Weise auswerten, dass keine Unregelmäßigkeit auf der Oberfläche 5 des Produkts 4 vorliegen kann.

Fig. 2 zeigt eine nicht erfindungsgemäße Ausführungsform einer Einrichtung mit zwei Aufnahmevorrichtungen 12, 13, von denen die Auf-nahmevorrichtung 13 auf die Kontrollzone 1 und auf die Oberfläche 5 des Objekts 4 und die Aufnahmevorrichtung 12 auf die Kontrollzone 1 ausgerichtet ist, nicht aber auf die Oberfläche 5 ausgerichtet ist. Die beiden Aufnahmevorrichtungen 12, 13 sind im Wesentlichen senkrecht zueinander auf die Kontrollzone 1 ausgerichtet.

Eine Aufnahme durch die Aufnahmevorrichtung 13 wird das Partikel 6 nun wie eine Unregelmäßigkeit an der Position 6c auf der Oberfläche 5 des Produkts 4 zeigen. Eine Aufnahme durch die Aufnahmevorrichtung 12 wird ebenfalls das Partikel 6 wiedergeben, und zwar wie eine Unregelmäßigkeit in der Position 6d, wenn man eine Projektionsfläche 10 für die Aufnahme zugrunde legt, die allerdings kein notwendiges Merkmal darstellt, sondern lediglich zur Kontrasterhöhung dienen kann. Es zeigen also die Aufnahmen der beiden Aufnahmevorrichtungen 12, 13 jeweils eine Unregelmäßigkeit in den Positionen 6c und 6d. Die Aufnahmen werden an die Auswertevorrichtung 9 weitergeleitet, wo diese Messdaten in der Weise ausgewertet werden, dass eine Unregelmäßigkeit, welche sich sowohl in der Aufnahme durch die Aufnahmevorrichtung 12, dort in der Position 6d, als auch in der Aufnahme durch die Aufnahmevorrichtung 13, dort in der Position 6c, wieder findet, nur durch einen Partikel 6, d.h. einen Schmutzpartikel, einen Tabakkrümel oder dergleichen, in der Kontrollzone 1 zwischen der Oberfläche 5 des Produkts 4 und den Aufnahmevorrichtungen 12, 13 verursacht sein kann.

Die Projektionsfläche 10 kann auch als Beleuchtungskörper ausgestaltet sein. Hierzu kann insbesondere ein flächiger Leuchtkörper oder eine angestrahlte helle Fläche Verwendung finden.

### Bezugszeichenliste

- 1: Kontrollzone
- 2: Aufnahmevorrichtung
- 3: Aufnahmevorrichtung
- 4: Produkt der Tabak verarbeitenden Industrie
- 5: Oberfläche des Produkts der Tabak verarbeitenden Industrie
- 6: Partikel
- 6a: Position auf der Oberfläche 5
- 6b: Position auf der Oberfläche 5
- 6c: Position auf der Oberfläche 5
- 6d: Position auf der Projektionsfläche 10
- 7: Vorrichtung zur Beleuchtung
- 8: Vorrichtung zum Fördern
- 9: Vorrichtung zur Auswertung
- 10: Projektionsfläche
- 12: Aufnahmevorrichtung
- 13: Aufnahmevorrichtung
- 21: begrenzende Linie für den von der Aufnahmevorrichtung 2 erfassten Bereich
- 22: begrenzende Linie für den von der Aufnahmevorrichtung 2 erfassten Bereich
- 31: begrenzende Linie für den von der Aufnahmevorrichtung 3 erfassten Bereich
- 32: begrenzende Linie für den von der Aufnahmevorrichtung 3 erfassten Bereich

## Patentansprüche

1. Einrichtung zur elektromagnetischen, insbesondere optischen, Kontrolle von stabförmigen Produkten (4) der Tabak verarbeitenden Industrie in einer Kontrollzone (1), wobei die Einrichtung eine Vorrichtung (8) zum Fördern der Produkte (4) in einlagiger Reihe hintereinander durch die Kontrollzone (1) aufweist, mit einer Vorrichtung (9) zur Auswertung der von Aufnahmevorrichtungen (2, 3) erfassten Aufnahmen, wobei mindestens zwei aus unterschiedlichen Richtungen auf die Kontrollzone (1) ausgerichtete Aufnahmevorrichtungen (2, 3) vorgesehen sind, wobei zwei Aufnahmevorrichtungen (2, 3) auf das mindestens eine Produkt (4) ausgerichtet sind, **dadurch gekennzeichnet, dass** die Aufnahmevorrichtungen (2, 3) derart versetzt und winkelig zueinander angeordnet sind, dass ein Teilbereich der Oberfläche des Produkts (4) zweifach und aus zwei verschiedenen Blickwinkeln abgebildet wird, wobei die Vorrichtung (9) zum Vergleichen der zu den von den Aufnahmevorrichtungen (2, 3) aufgenommenen Aufnahmen gehörenden Daten miteinander ausgebildet ist.

2. Einrichtung nach Anspruch 1, **dadurch gekennzeichnet, dass** die Einrichtung eine Vorrichtung (7) zur Beleuchtung der Kontrollzone (1) aufweist.

3. Maschine der Tabak verarbeitenden Industrie, umfassend eine Einrichtung nach Anspruch 1 oder 2.

4. Verfahren zur elektromagnetischen, insbesondere optischen, Kontrolle von stabförmigen Produkten (4) der Tabak verarbeitenden Industrie in einer Kontrollzone (1), **dadurch gekennzeichnet, dass** die Kontrollzone (1) von Aufnahmevorrichtungen (2, 3) aus zwei unterschiedlichen Richtungen aufgenommen wird, wobei zwei Aufnahmen von einem Teilbereich der Oberfläche des wenigstens einen Produkts (4) aus unterschiedlichen Richtungen erfasst werden, die beiden Aufnahmen an eine Auswertevorrichtung (9) weitergeleitet und in der Auswertevorrichtung (9) die zu den Aufnahmen gehörigen Daten miteinander verglichen werden, wobei eine Unregelmäßigkeit auf der Oberfläche (5) des Produkts (4) dann unterstellt wird, wenn eine Unregelmäßigkeit auf den zwei Aufnahmen an solchen Positionen (6a, 6b) auftritt, dass solchen zwei Positionen (6a, 6b) genau eine Stelle auf der Oberfläche (5) des Produkts (4) zugeordnet werden kann.

5. Verfahren nach Anspruch 4, **dadurch gekennzeichnet, dass** die Auswertung der Aufnahmen in der Weise geschieht, dass keine Unregelmäßigkeit auf der Oberfläche (5) des Produkts (4) unterstellt wird, wenn keiner Unregelmäßigkeit auf den zwei Aufnahmen eine eindeutige Stelle auf der Oberfläche (5) des Produkts (4) zugeordnet werden kann.

## Claims

1. Apparatus for electromagnetically, in particular optically, monitoring rod-shaped products (4) of the tobacco processing industry in a monitoring zone (1), which apparatus comprises a device (8) for conveying the products (4) one after the other in a single-layered row through the monitoring zone (1), having a device (9) for evaluating images captured by imaging devices (2, 3), and at least two imaging devices (2, 3) oriented onto the monitoring zone (1) from different directions are provided, two imaging devices (2, 3) being oriented onto the at least one product (4), **characterised in that** the imaging devices (2, 3) are offset and angled relative to one another in such a way that a part-region of the surface of the product (4) is imaged twice from two different viewing angles and the device (9) is configured to compare with one another the data belonging to the images recorded by the imaging devices (2, 3).

2. Apparatus as claimed in claim 1, **characterised in that** the apparatus comprises a device (7) for illuminating the monitoring zone (1).

3. Machine of the tobacco processing industry comprising an apparatus as claimed in claim 1 or 2.

4. Method of electromagnetically, in particular optically, monitoring rod-shaped products (4) of the tobacco processing industry in a monitoring zone (1), **characterised in that** the monitoring zone (1) is recorded from two different directions by imaging devices (2, 3), and two images of a part-region of the surface of the at least one product (4) are captured from different directions, the two images are relayed to an evaluating device (9) and the data belonging to the images are compared with one another in the evaluating device (9), and it is assumed that there is an irregularity on the surface (5) of the product (4) if an irregularity occurs on the two images at such positions (6a, 6b) that precisely one point on the surface (5) of the product (4) can be ascribed to two such positions (6a, 6b).

5. Method as claimed in claim 4, **characterised in that** the images are evaluated in such a way that it is assumed that there is no irregularity on the surface (5) of the product (4) if one clear point on the surface (5) of the product (4) cannot be ascribed to an irregularity on the two images.

## Revendications

1. Installation pour le contrôle électromagnétique, notamment optique, de produits (4) en forme de tige de l'industrie du traitement du tabac dans une zone de contrôle (1), l'installation comprenant un dispositif (8) pour transporter les produits (4) à travers la zone de contrôle (1) les uns après les autres en une file monocouche, avec un dispositif (9) pour l'exploitation de prises de vue faites par des dispositifs de prises de vue (2, 3), où au moins deux dispositifs de prises de vue (2, 3) pointant sur la zone de contrôle (1) de directions différentes sont prévues, où deux dispositifs de prise de vue (2, 3) sont dirigés sur le ou les produits (4), **caractérisée en ce que** les dispositifs de prise de vue (2, 3) sont disposés décalés et formant un angle l'un par rapport à l'autre de telle façon qu'une zone partielle de la surface du produit (4) soit visualisée en double et à partir de deux angles de vue différents, le dispositif (9) étant adapté pour comparer, les unes aux autres, les données associées aux prises de vue faites par les dispositifs de prise de vue (2, 3).

2. Installation selon la revendication 1, **caractérisée en ce que** l'installation comprend un dispositif (7) pour éclairer la zone de contrôle (1).

3. Machine de l'industrie du traitement du tabac comprenant une installation selon la revendication 1 ou 2.

4. Procédé de contrôle électromagnétique, notamment optique, de produits (4) en forme de tige de l'industrie du traitement du tabac dans une zone de contrôle (1), **caractérisé en ce que** la zone de contrôle (1) est prise par des dispositifs de prise de vue (2, 3) de deux directions différentes, où deux prises de vue d'une zone partielle de la surface du ou des produits (4) sont faites de directions différentes, les deux prises de vue sont transférées à un dispositif d'exploitation (9) et les données associées aux prises de vue sont comparées les unes aux autres dans le dispositif d'exploitation (9), où une irrégularité de la surface (5) du produit (4) est supposée lorsqu'une irrégularité apparaît sur les deux prises de vue à de telles positions (6a, 6b) qu'à ces deux positions (6a, 6b) puisse être associé précisément un endroit sur la surface (5) du produit (4).

5. Procédé selon la revendication 4, **caractérisé en ce que** l'exploitation des prises de vue est effectuée de telle façon qu'aucune irrégularité sur la surface (5) du produit (4) ne soit supposée lorsqu'à aucune irrégularité sur les deux prises de vue ne peut être associé un endroit unique sur la surface (5) du produit (4).
